# EUROPÄISCHE PATENTSCHRIFT

(11) **EP 1 913 676 B1**
(45) Veröffentlichungstag und Bekanntmachung des Hinweises auf die Patenterteilung: **05.09.2018**
(21) Anmeldenummer: 06762736.4
(22) Anmeldetag: 21.07.2006
(51) Int. Cl.: H02K 9/19, H02K 5/136, H02K 5/20

(54) **KÜHLMITTELPUMPE FÜR ELEKTROMOTORE**
COOLANT PUMP FOR ELECTRIC MOTORS
POMPE A LIQUIDE DE REFROIDISSEMENT POUR MOTEURS ELECTRIQUES

(30) Priorität: 12.08.2005 DE 102005038209
(43) Veröffentlichungstag der Anmeldung: 23.04.2008
(73) Patentinhaber: WILO SE, 44263 Dortmund (DE)
(72) Erfinder: STRELOW, Günter, 44801 Bochum (DE)
(74) Vertreter: Cohausz Hannig Borkowski Wißgott
(86) Internationale Anmeldenummer: PCT/EP2006/007184
(87) Internationale Veröffentlichungsnummer: WO 2007/019939

(56) Entgegenhaltungen:
- DE-A1- 2 659 482
- FR-A1- 2 575 341
- GB-A- 2 250 063
- JP-A- 11 041 862
- US-A- 2 844 101
- US-A- 3 866 438
- US-A- 5 014 800
- US-A- 5 382 854
- US-A1- 2005 029 881

## Beschreibung

Die Erfindung betrifft einen flüssigkeitsgekühlten Elektromotor mit einem internen Kühlkreislauf, der von einer Motorkreisel-Kühlpumpe umgewälzt wird.

Große Elektromotore benötigen zum Ableiten der Verlustwärme Kühleinrichtungen. Als Kühlmedium werden sowohl Gase als auch flüssige Medien verwendet. Da in der Regel eine Konvektion zur Abfuhr der Verlustleistung nicht ausreicht, werden Ventilatoren oder Pumpen für die Strömungserzeugung eingesetzt.

Vielfach treibt der Elektromotor diese Komponenten an. Das Ventilator- oder Pumpenrad ist dabei direkt mit der Welle des Motors verbunden. Werden andere Drehzahlen als die Wellendrehzahl benötigt, werden Lösungen mit einem zwischengeschalteten Getriebe oder Kupplungen verwendet. Bei Pumpen, die in explosionsgefährdeten Umgebungen eingesetzt werden, müssen diese Komponenten zusätzlich die EX-Schutz Anforderungen (Vermeidung von Funken) erfüllen. Üblicherweise werden solche Teile nur in geringen Stückzahlen produziert und sind sehr teuer. Sie beeinflussen damit die Kosten des Gesamtaggregates erheblich. Aufgrund der starren Kupplung mit der Antriebswelle des Motors, wird das Kühlmedium auch umgewälzt, wenn kein Kühlbedarf besteht. Dies verringert die Leistungsbilanz der Maschine.

Die Patentanmeldung GB 2 250 063 A offenbart eine Schmiervorrichtung für einen Elektromotor in einem elektrischen Automobil, mit der eine effektive Schmierung und Kühlung des Elektromotors erzielbar ist. Die Schmiervorrichtung verfügt über eine Öl-Pumpe, die zumindest teilweise innerhalb des Gehäuse des Elektromotors angeordnet ist und dafür vorgesehen ist Öl aus einer Öl-Wanne durch Kanäle zu Wicklungen und Lagern des Elektromotors zu pumpen, wobei das Öl zum Abkühlen durch ein Rohr mit Kühlrippen fließt, um einen effektiven Wärmeaustauch mit er Umgebung zu erzielen. Aus dem Patent US 5,014,800 A ist eine Kühlvorrichtung für einen Elektromotor bekannt, bei der ein zur Kühlung vorgesehenes Öl mittels einer Öl-Pumpe durch einen Kühlkreislauf befördert wird, der ein Öl-Reservoir und eine Öl-Kühlkammer mit Kühlrippen umfasst. Das Patent US 5,382,854 A offenbart ebenfalls einen Elektromotor mit einem Öl-Kühlkreislauf, bei dem das zur Kühlung vorgesehene Öl mittels einer separaten zumindest teilweise innerhalb des Gehäuse des Elektromotors angeordneten Öl-Pumpe befördert wird.

Aufgabe der Erfindung ist es, den Antrieb des Kühlkreislaufes eines Elektromotors so zu verbessern, dass bei einfacher Herstellung eine konstruktive Einheit besteht, die eine leichte Montage ermöglicht, eine bedarfsgerechte Anpassung der Kühlleistung schafft und insbesondere Maßnahmen für einen EX-Schutz erübrigt.

Diese Aufgabe wird erfindungsgemäß durch einen Flüssigkeitsgekühlten Elektromotor mit den Merkmalen des Anspruchs 1 gelöst, wobei die Kühlpumpe mit einer von der Elektromotorwelle getrennten Welle teilweise oder vollständig innerhalb des Gehäuses des Elektromotors angeordnet ist.

In den Elektromotor wird eine in großen Stückzahlen hergestellte Nassläuferpumpe eingebaut. Hierdurch sind deutliche Kostensenkungen erzielbar und die Pumpe kann unabhängig von der Wellendrehzahl betrieben werden. Das bedeutet: Das Medium wird nur dann umgewälzt, wenn gekühlt werden muss. Bei Verwendung einer drehzahlgeregelten Pumpe kann die Kühlleistung bedarfsgerecht angepasst werden. Durch den Einbau der Pumpe in den Motor, sind extra Maßnahmen für den EX-Schutz nicht erforderlich, bzw. können mit einem deutlich geringeren Aufwand als bei extern betriebenen Aggregaten realisiert werden.

Vorteilhafte Ausgestaltungen der Erfindung sind in den Unteransprüchen aufgeführt.

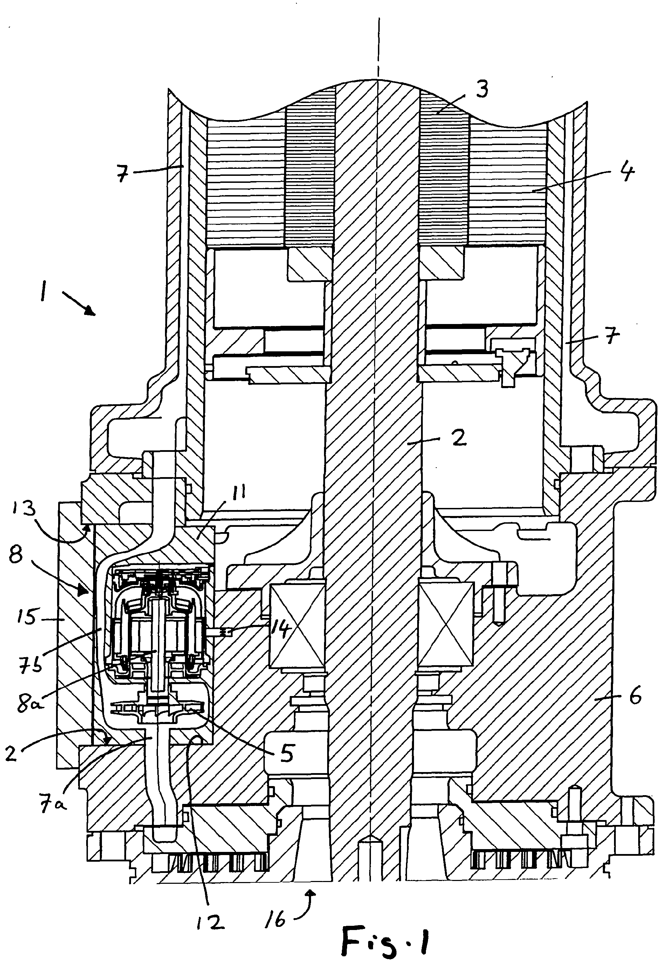

Ein Ausführungsbeispiel der Erfindung ist in den Zeichnungen dargestellt und wird im Folgenden näher beschrieben. Es zeigen
Fig. 1 einen axialen Schnitt durch den Elektromotor einer Motorkreiselpumpe und

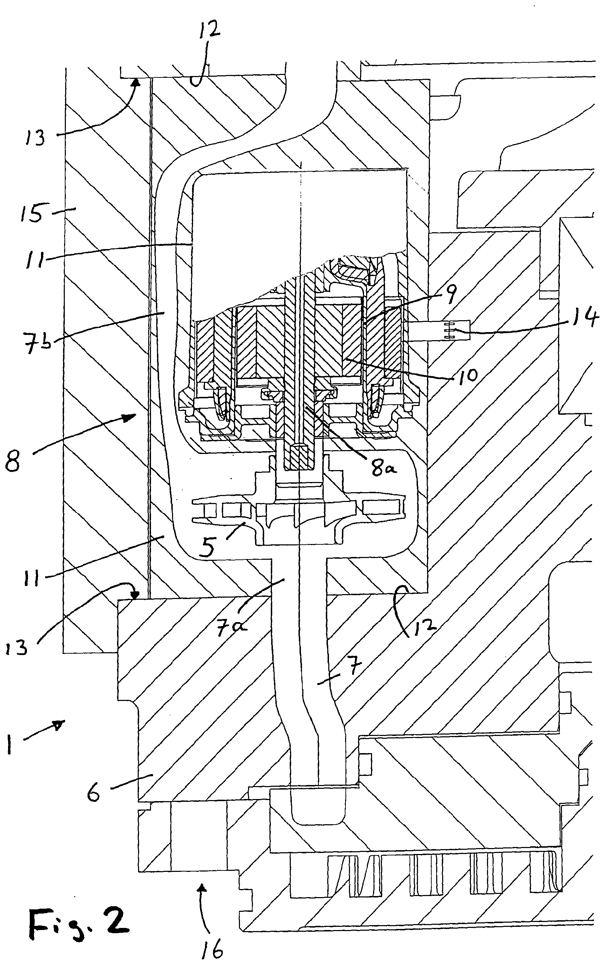

Fig. 2 einen Ausschnitt aus Fig. 1.

Der Elektromotor 1 einer Motorkreiselpumpe weist eine Motorwelle 2 auf, auf der ein Rotor 3 sitzt, der von einer Statorwicklung 4 umgeben ist. An einem Ende der Motorwelle 2 ist die Welle einer nicht dargestellten Kreiselpumpe mit ihrem Läufer koaxial angeschlossen, wobei das Pumpengehäuse am Motorengehäuse 6 befestigt ist.

Innerhalb des Motorengehäuses 6 befinden sich die Kanäle 7 eines Kühlkreislaufes, dessen Kühlflüssigkeit von einem separaten Motorpumpenaggregat umgewälzt wird, das eine von einem Elektromotor angetriebene Kreiselpumpe besitzt und im Folgenden "Kühlpumpe" 8 genannt wird. Die Kühlpumpe 8 ist eine Nassläuferpumpe mit einem innerhalb eines Spalttopfes 9 angeordneten Rotor 10, der auf einer Welle 8a sitzt, die an ihrem Ende den Pumpenläufer 5 trägt. Statt eines Spalttopfes kann der Rotor auch von einem Spaltrohr umgeben sein.

Die Kühlpumpe 8 saugt mit ihrem Läufer 5 über einen koaxialen, im Kühlpumpengehäuse 11 angeordneten Kanal 7a das Kühlmittel an und fördert es in einen Kanal 7b, der seitlich im Kühlpumpengehäuse 11 neben dem Motorenstator verläuft.

Das Gehäuse 6 des zu kühlenden Elektromotors 1 bildet einen von außen zugänglichen Aufnahmeraum 12, der nach außen zur Umgebung des Elektromotors 1 hin offen ist (Öffnung 13), solange die Öffnung 13 nicht verschlossen ist. In den Raum 12 ist die Kühlpumpe 8 mit ihrem Gehäuse 11 von außen formschlüssig einschiebbar, wobei die Außenabmessungen des Kühlpumpengehäuses 11 den Innenabmessungen des Aufnahmeraums 12 entsprechen. Die elektrischen Anschlüsse der Kühlpumpe 8 mit den elektrischen Anschlüssen im Aufnahmeraum 12 erfolgen über Steckverbindungen 14, die außen am Gehäuse 11 und innen im Aufnahmeraum 12 befestigt sind, so dass nach dem Einschieben der Kühlpumpe 8 die Verbindungen geschlossen sind.

In gleicher Weise werden durch das Einschieben der Kühlpumpe 8 in den Aufnahmeraum 12 die hydraulischen Verbindungen der Kanäle 7, 7a, 7b hergestellt, die in den Innen- und Außenwänden miteinander fluchten. Nach dem Einsetzen der Kühlpumpe 8 wird der Aufnahmeraum 12 bzw. dessen Öffnung 13 durch einen Deckel 15 verschlossen, der von außen auf- und/oder eingesetzt wird.

Die Kühlpumpe 8 kann dadurch gesteuert/geregelt werden, dass sie einmal ausgeschaltet wird und hierbei verschieden lange Einschaltzeiten hat.

Alternativ ist die Drehzahl der Kühlpumpe 8 unabhängig von der Drehzahl des Elektromotors 1 regelbar. In beiden Fällen ist eine optimale und genaue Kühlung erreichbar ohne unnötigen Energieaufwand.

Im Ausführungsbeispiel ist bei abgenommenen Deckel 15 der Aufnahmeraum zur Seite des Motorengehäuses 6 hin offen. Der Aufnahmeraum 12 kann sich aber auch zur Stirnseite 16 des Motorengehäuses 6 hin öffnen. Ferner kann der Deckel fehlen, wenn der Aufnahmeraum 12 und seine Öffnung 13 von dem Gehäuse 11 der Kühlpumpe 8 dichtend ausgefüllt sind. Hierbei können die Kühlpumpe und ihr Gehäuse 11 seitlich über das Gehäuse 6 vorstehen. Im letzten Fall kann ein gewölbter Deckel das vorstehende Gehäuse 11 umfassen.

## Patentansprüche

1. Flüssigkeitsgekühlter Elektromotor (1) mit einem internen Kühlkreislauf (7), der von einer Motorkreisel-Kühlpumpe (8) umgewälzt wird, wobei die Kühlpumpe (8) mit einer von der Elektromotorwelle (2) getrennten Welle (8a) teilweise oder vollständig innerhalb des Gehäuses (6) des Elektromotors (1) angeordnet ist, wobei der Elektromotor (1) einen von außen zugänglichen Aufnahmeraum (12) aufweist, der in der Außenwand des Elektromotorgehäuses (6) eine Öffnung (13) bildet, durch die die Kühlpumpe (8) einschiebbar ist, **dadurch gekennzeichnet,**
- **dass** die Kühlpumpe (8) ein separates Motorpumpenaggregat ist, das ein Pumpenlaufrad (5), einen Elektromotor und ein Kühlpumpengehäuse (11) aufweist,
- **dass** das Kühlpumpengehäuse (11) Kühlmittelkanäle (7a, 7b) aufweist,
- **dass** elektrische Anschlüsse der Kühlpumpe (8), die am Kühlpumpengehäuse (11) angeordnet sind, mit elektrischen Anschlüssen im Aufnahmeraum (12) über Steckverbindungen (14) verbindbar sind, so dass nach dem Einschieben der Kühlpumpe (8) eine elektrische Verbindung vorliegt, und
- **dass** durch das Einschieben der Kühlpumpe (8) in den Aufnahmeraum (12) hydraulische Verbindungen zwischen den Kühlmittelkanälen (7a, 7b) und dem Kühlkreislauf (7) herstellbar sind.

2. Elektromotor nach Anspruch 1, **dadurch gekennzeichnet, dass** die Kühlpumpe (8) eine Nassläuferpumpe ist, deren Rotor (10) innerhalb eines Spaltrohres oder eines Spalttopfes (9) läuft.

3. Elektromotor nach Anspruch 1 oder 2, **dadurch gekennzeichnet, dass** die Drehzahl der Kühlpumpe (8) unabhängig von der Drehzahl des Elektromotors (1) regelbar ist.

4. Elektromotor nach einem der vorherigen Ansprüche, **dadurch gekennzeichnet, dass** die Öffnung (13) durch einen Deckel (15) oder das Kühlpumpengehäuse (11) verschließbar ist.

5. Elektromotor nach einem der vorherigen Ansprüche, **dadurch gekennzeichnet, dass** die Kühlpumpe (8) durch Steckverbindungen (14) mit den elektrischen und/oder hydraulischen Anschlüssen des Elektromotors (1) verbunden ist.

6. Elektromotor nach einem der vorherigen Ansprüche, **dadurch gekennzeichnet, dass** der Elektromotor (1) der Antrieb einer Motorpumpe insbesondere einer Kreiselpumpe ist.

## Claims

1. Liquid-cooled electric motor (1) with an internal cooling circuit (7) in which circulation is brought about by a motor-driven centrifugal cooling pump (8), wherein the cooling pump (8), with a shaft (8a) which is separate from the electric motor shaft (2), is arranged partially or completely within the housing (6) of the electric motor (1), wherein the electric motor (1) has a receiving space (12) which is accessible from the outside and which forms, in the outer wall of the electric motor housing (6), an opening (13) through which the cooling pump (8) is able to be inserted, **characterized**
- **in that** the cooling pump (8) is a separate motor-driven pump unit which has a pump impeller (5), an electric motor and a cooling pump housing (11),
- **in that** the cooling pump housing (11) has coolant ducts (7a, 7b),
- **in that** electrical connections of the cooling pump (8), which are arranged on the cooling pump housing (8), are able to be connected to electrical connections in the receiving space (12) via plug connections (14), with the result that an electrical connection is present after the insertion of the cooling pump (8), and
- **in that** hydraulic connections between the coolant ducts (7a, 7b) and the cooling circuit (7) are able to be established by the insertion of the cooling pump (8) into the receiving space (12).

2. Electric motor according to Claim 1, **characterized in that** the cooling pump (8) is a wet-running pump whose rotor (10) runs within a containment can or a containment shell (9).

3. Electric motor according to Claim 1 or 2, **characterized in that** the rotational speed of the cooling pump (8) is able to be regulated independently of the rotational speed of the electric motor (1).

4. Electric motor according to one of the preceding claims, **characterized in that** the opening (13) is able to be closed off by a cover (15) or the cooling pump housing (11).

5. Electric motor according to one of the preceding claims, **characterized in that** the cooling pump (8) is connected to the electrical and/or hydraulic connections of the electric motor (1) by plug connections (14).

6. Electric motor according to one of the preceding claims, **characterized in that** the electric motor (1) is the drive of a motor-driven pump, in particular of a centrifugal pump.

## Revendications

1. Moteur électrique refroidi par liquide (1) doté d'un circuit de refroidissement interne (7), dans lequel la circulation est assurée par une pompe de refroidissement centrifuge à moteur (8), dans lequel la pompe de refroidissement (8), qui présente un arbre (8a) séparé de l'arbre (2) du moteur électrique, est en partie ou complètement disposée dans le carter (6) du moteur électrique (1), dans lequel le moteur électrique (1) comporte un espace de réception (12) accessible de l'extérieur qui forme une ouverture (13) dans la paroi extérieure du carter de moteur électrique (6), à travers laquelle la pompe de refroidissement (8) peut être introduite, **caractérisé**
- **en ce que** la pompe de refroidissement (8) est un groupe motopompe séparé qui comporte une roue de pompe (5), un moteur électrique et un carter de pompe de refroidissement (11),
- **en ce que** le carter de pompe de refroidissement (11) comporte des canaux de liquide de refroidissement (7a, 7b),
- **en ce que** des raccordements électriques de la pompe de refroidissement (8), qui sont disposés sur le carter de pompe de refroidissement (11), peuvent être raccordés à des raccordements électriques dans la chambre de réception (12) par l'intermédiaire de raccords enfichables (14), de sorte qu'une liaison électrique est présente après que la pompe de refroidissement (8) a été insérée, et
- **en ce que** des liaisons hydrauliques peuvent être établies entre les canaux de liquide de refroidissement (7a, 7b) et le circuit de refroidissement (7) en insérant la pompe de refroidissement (8) dans la chambre de réception (12).

2. Moteur électrique selon la revendication 1, **caractérisé en ce que** la pompe de refroidissement (8) est une pompe à rotor noyé dont le rotor (10) tourne dans une gaine d'entrefer ou un pot d'entrefer (9).

3. Moteur électrique selon la revendication 1 ou 2, **caractérisé en ce que** la vitesse de la pompe de refroidissement (8) peut être réglée indépendamment de la vitesse de rotation du moteur électrique (1).

4. Moteur électrique selon l'une des revendications précédentes, **caractérisé en ce que** l'ouverture (13) peut être fermée par un couvercle (15) ou par le carter de pompe de refroidissement (11).

5. Moteur électrique selon l'une des revendications précédentes, **caractérisé en ce que** la pompe de refroidissement (8) est reliée aux raccordements électriques et/ou hydrauliques du moteur électrique (1) par l'intermédiaire de raccords enfichables (14).

6. Moteur électrique selon l'une des revendications précédentes, **caractérisé en ce que** le moteur électrique (1) est le dispositif d'entraînement d'une motopompe, en particulier d'une pompe centrifuge.
